# EUROPEAN PATENT APPLICATION

(11) **EP 4 478 348 A1**
(43) Date of publication of application: **18.12.2024**
(21) Application number: 22930648.5
(22) Date of filing: 09.12.2022
(51) Int. Cl.: G10K 11/178, B60N 2/64, B61D 33/00, B60Q 5/00

(54) **VEHICLE SEAT, LOUDSPEAKER AND VEHICLE**

(30) Priority: 08.03.2022 CN 202210232456
(71) Applicant: Huawei Technologies Co., Ltd., Shenzhen, Guangdong 518129 (CN)
(72) Inventor: ZHANG, Pengju, Shanghai 200000 (CN); TAO, Jiancheng, Nanjing, Jiangsu 210000 (CN); ZOU, Haishan, Nanjing, Jiangsu 210000 (CN); ZHONG, Xu, Shenzhen, Guangdong 518129 (CN); WU, Sheng, Shenzhen, Guangdong 518129 (CN); QIU, Xiaojun, Shenzhen, Guangdong 518129 (CN)
(74) Representative: Maiwald GmbH
(86) International application number: PCT/CN2022/138062
(87) International publication number: WO 2023/169026

(57) **Abstract**

A vehicle seat, a loudspeaker, and a vehicle are provided, to improve noise reduction effect of active noise control. A vehicle seat (100) includes a backrest (20) and a loudspeaker (40). The backrest (20) includes a first framework (21) and a skin (23). The loudspeaker (40) is mounted on the first framework (20). A first opening (23a) is disposed on the skin (23). The first opening (23a) coincides with the loudspeaker (40) when being viewed from a direction facing the first opening (23a). When the foregoing structure is used, for example, in comparison with that a loudspeaker is configured in a headrest, good noise reduction effect can be obtained.

## Description

This application claims priority to Chinese Patent Application No. 202210232456.5, filed with the China National Intellectual Property Administration on March 8, 2022 and entitled "VEHICLE SEAT, LOUDSPEAKER, AND VEHICLE", which is incorporated herein by reference in its entirety.

### TECHNICAL FIELD

This application relates to intelligent vehicle technologies, and in particular, to a vehicle seat, a loudspeaker, and a vehicle.

### BACKGROUND

In order to improve noise, vibration, and harshness (noise, vibration and harshness, NVH) performance in a vehicle cockpit, an active noise control (active noise control, ANC) technology is increasingly widely applied to vehicles. A basic principle of active noise control is as follows: According to a destructive interference phenomenon of a sound wave, an anti-noise source (also referred to as secondary sound source) that is added manually is used, so that destructive interference is performed on a sound wave (also referred to as anti-noise) generated by the anti-noise source and noise generated by a noise source (also referred to as primary sound source), to implement noise reduction.

In the conventional technology, there are active noise reduction solutions in which a loudspeaker as the anti-noise source is mounted in a door plate of a vehicle or in a headrest of a seat. However, these solutions still have room for improvement in terms of improving noise reduction effect.

### SUMMARY

This application provides a vehicle seat, a loudspeaker, and a vehicle, to improve noise reduction effect.

A first aspect of this application provides a vehicle seat, including a backrest and a loudspeaker, where the backrest includes a first framework and a skin; the loudspeaker is mounted on the first framework; and a first opening is disposed on the skin, and the first opening coincides with the loudspeaker when being viewed from a direction facing the first opening.

When the foregoing vehicle seat is used, during noise control, good noise reduction effect can be obtained. Specifically, as proved in the following embodiments, the loudspeaker that is used as an anti-noise source is configured in the backrest. In comparison with that the loudspeaker is configured in a headrest, good noise reduction effect can be obtained in a larger range, and robustness of head movement of a seated person can be obtained. In addition, in comparison with that the loudspeaker is configured in the headrest, a distance between the anti-noise source and an ear of the seated person is appropriately increased, so that current noise of an active noise reduction system has less impact on human hearing, thereby improving noise reduction effect. In addition, in comparison with the headrest, the backrest is sufficient in space. Therefore, a large limitation is not imposed on a specification like a size of the loudspeaker, and reduction of noise reduction effect is avoided.

In addition, in comparison with a case in which the loudspeaker is configured in a vehicle door, a distance between a loudspeaker position and an ear of the seated person in this solution is more appropriate, thereby improving noise reduction effect and reducing power consumption.

In addition, because the loudspeaker is mounted on the first framework on the backrest, mounting strength of the loudspeaker can be improved, position stability of the loudspeaker can be improved, and noise reduction effect can be improved.

In a possible implementation of the first aspect, the first opening faces upward.

In this way, noise reduction effect can be improved. Specifically, for example, in comparison with a case in which the first opening faces the front, the first opening can be prevented from being blocked by the back of the seated person. Consequently, anti-noise reaching the ear is reduced, and noise reduction effect is reduced.

In a possible implementation of the first aspect, the vehicle seat further includes a headrest, and the first opening is configured in a left-right direction in a misaligned manner with the headrest.

In this way, impact of the headrest on a loudspeaker mounting operation and a possible operation like maintenance or replacement can be suppressed, and an operation like mounting, maintenance, or replacement of the loudspeaker can be easily performed.

In a possible implementation of the first aspect, the first framework has a shoulder, the shoulder is provided with a recess that is recessed downward, and the loudspeaker is configured in the recess.

In this way, mounting strength of the loudspeaker can be easily improved. In addition, in comparison with a configuration manner in which the loudspeaker is overlapped in front of the framework, it is easy to make the loudspeaker away from a front surface of the backrest, and increase thickness of the backrest (the padding of the backrest) in this part, thereby suppressing reduction of comfort caused by mounting of the loudspeaker to the backrest.

In a possible implementation of the first aspect, a shield is mounted on the skin, the shield covers the first opening, and a plurality of through holes are disposed on the shield.

In this way, the loudspeaker can be prevented from being squeezed, scratched, or the like.

In a possible implementation of the first aspect, a mounting component is configured on the skin, the shield is mounted on the skin through being mounted on the mounting component, and the shield is mounted on the mounting component in a detachable manner.

When the foregoing structure is used, the shield is detachable, so that the loudspeaker can be easily maintained or replaced. In addition, the shield is mounted on the skin through the mounting component. Therefore, it is easy to mount the shield.

In a possible implementation of the first aspect, the shield is circular, and the mounting component is square.

When the foregoing structure is used, in comparison with the circular shield directly mounted on the skin, the shield can be easily mounted on the skin through the square mounting component.

In a possible implementation of the first aspect, the loudspeaker includes a first box, a second box is configured on the first framework, and the first box is inserted into the second box in a detachable manner.

When the foregoing structure is used, the second box is configured on the framework, and the first box of the loudspeaker is inserted into the second box. In this way, the loudspeaker can be easily maintained or replaced.

In a possible implementation of the first aspect, a first interface is disposed on the first box, a second interface is disposed on the second box, and the first interface is electrically connected to the second interface.

When the foregoing structure is used, the first interface is disposed on the first box, and the second interface is disposed on the second box. When the first box is inserted into the second box, the first interface and the second interface may also be electrically connected. In this way, an operation like mounting, maintenance, or replacement of the loudspeaker can be easily performed.

In a possible implementation of the first aspect, the loudspeaker includes the first box and a sound emitting unit, the sound emitting unit is mounted on the first box, the sound emitting unit is mounted on the first box in a manner of being capable of performing first rotation, and the first rotation is rotation centered on a first axis that is configured in the left-right direction.

When the foregoing structure is used, an orientation of the sound emitting unit may be adjusted, so that noise reduction effect is easily improved.

In a possible implementation of the first aspect, the vehicle seat further includes a first motor, and the first motor is configured to drive the sound emitting unit to perform the first rotation.

When the foregoing structure is used, an orientation of the sound emitting unit can be automatically adjusted, so that noise reduction effect is easily improved.

In a possible implementation of the first aspect, the vehicle seat further includes a control apparatus, where the control apparatus obtains ear position information of a seated person, and controls, based on the ear position information, the first motor to drive the sound emitting unit to perform the first rotation.

When the foregoing structure is used, an orientation of the sound emitting unit is adjusted based on the ear position information of the seated person, so that noise reduction effect can be improved.

In a possible implementation of the first aspect, the loudspeaker is mounted on the first framework in a manner of being capable of performing second rotation, and the second rotation is rotation centered on a second axis that is configured in the left-right direction.

When the foregoing structure is used, an orientation of the sound emitting unit may be adjusted, so that noise reduction effect is easily improved.

In a possible implementation of the first aspect, the vehicle seat further includes a second motor, and the second motor is configured to drive the loudspeaker to perform the second rotation.

When the foregoing structure is used, an orientation of the sound emitting unit can be automatically adjusted, so that noise reduction effect is easily improved.

In a possible implementation of the first aspect, the vehicle seat further includes a control apparatus, where the control apparatus obtains ear position information of a seated person, and controls, based on the ear position information, the second motor to drive the loudspeaker to perform the second rotation.

When the foregoing structure is used, an orientation of the sound emitting unit is adjusted based on the ear position information of the seated person, so that noise reduction effect can be improved.

In a possible implementation of the first aspect, the loudspeaker is capable of moving between a first position and a second position; in the first position, the loudspeaker protrudes from the first opening outside an outer surface of the skin; and in the second position, the loudspeaker is inserted into the outer surface of the skin.

When the foregoing structure is used, when active noise control is performed, the loudspeaker may be moved to the first position protruding outside the outer surface of the skin, and when active noise control is not required, the loudspeaker may be inserted into the outer surface of the skin. In this way, damage to the loudspeaker due to collision or another reason can be reliably avoided.

In a possible implementation of the first aspect, the vehicle seat further includes a third motor, and the third motor is configured to drive the loudspeaker to move between the first position and the second position.

In a possible implementation of the first aspect, the loudspeaker includes a diaphragm, and the diaphragm is configured facing forward.

When the foregoing structure is used, the diaphragm is configured facing forward. On one side, noise reduction effect can be improved, and on the other side, damage to the loudspeaker due to collision or another reason can be reliably avoided.

In a possible implementation of the first aspect, the backrest further includes a padding, an accommodating hole is disposed on the padding, the loudspeaker is accommodated in the accommodating hole, and a minimum distance between a hole wall of the accommodating hole and a front surface of the padding is greater than 0.5 centimeters (cm).

When the foregoing structure is used, because the minimum distance between the hole wall of the accommodating hole and the front surface of the padding is greater than 0.5 cm, a decrease of ride comfort can be suppressed.

In a possible implementation of the first aspect, the backrest further includes a padding, an accommodating hole is disposed on the padding, the loudspeaker is accommodated in the accommodating hole, and a reinforcing rib is disposed on an inner wall of the accommodating hole.

When the foregoing structure is used, because the reinforcing rib is disposed on the inner wall of the accommodating hole, a decrease of ride comfort can be suppressed.

In a possible implementation of the first aspect, an included angle between a center line of the diaphragm of the loudspeaker and a vertical direction is set to 0 to 60 degrees.

In a possible implementation of the first aspect, a diameter of the diaphragm of the loudspeaker is set to 1 to 4 Chinese inches.

In a possible implementation of the first aspect, the loudspeaker includes the first box, and an inner cavity volume of the first box is 1 to 3 liters.

A second aspect of this application provides a loudspeaker, including a mounting part configured to be mounted on a framework of a backrest of a vehicle seat.

When the loudspeaker in the second aspect is used, same technical effect as that of the first aspect can be obtained. Therefore, details are not described herein again.

In a possible implementation of the second aspect, the loudspeaker further includes a first box and a sound emitting unit, the sound emitting unit is mounted on the first box, and the mounting part is disposed on the first box.

In a possible implementation of the second aspect, an inner cavity volume of the first box is 1 to 3 liters.

In a possible implementation of the second aspect, a diameter of a diaphragm of the loudspeaker is set to 1 to 4 Chinese inches.

In a possible implementation of the second aspect, the mounting part includes a guiding component.

In a possible implementation of the second aspect, the loudspeaker is configured to switch between a first position and a second position under control of a control apparatus.

A third aspect of this application provides a vehicle, including a vehicle seat of any structure in the first aspect.

A fourth aspect of this application provides a noise control method, including: obtaining sound information; determining anti-noise information based on the sound information; and sending a first control instruction based on the anti-noise information, where the control instruction is used to enable a loudspeaker to emit anti-noise.

In a possible implementation of the fourth aspect, the method further includes: sending a second control instruction, where the second control instruction is used to adjust a sound emitting direction of the loudspeaker.

When the foregoing manner is used, because the sound emitting direction of the loudspeaker is adjusted, good noise reduction effect can be obtained.

In a possible implementation of the fourth aspect, the method further includes: obtaining ear position information of a user; and sending the second control instruction based on the ear position information of the user.

When the foregoing manner is used, because the sound emitting direction of the loudspeaker is adjusted based on the ear position information of the user, so that the user can experience good noise reduction effect.

In a possible implementation of the fourth aspect, the method further includes: obtaining identity information of the user; and sending the second control instruction based on the identity information of the user.

When the foregoing manner is used, the sound emitting direction is adjusted based on the identity information of the user, so that the sound emitting direction can adapt to setting of the user, and the like, and the user can experience good noise reduction effect.

In a possible implementation of the fourth aspect, the method further includes: sending a third control instruction, where the third control instruction is used to adjust a height position of the loudspeaker.

When the foregoing manner is used, because the height position of the loudspeaker is adjusted, good noise reduction effect can be obtained.

In a possible implementation of the fourth aspect, the method further includes: obtaining the ear position information of the user; and sending the third control instruction based on the ear position information of the user.

When the foregoing manner is used, because the height position of the loudspeaker is adjusted based on the ear position information of the user, the user can experience good noise reduction effect.

In a possible implementation of the fourth aspect, the method further includes: obtaining the identity information of the user; and sending the third control instruction based on the identity information of the user.

When the foregoing manner is used, the height position of the loudspeaker is adjusted based on the identity information of the user, so that a height of the loudspeaker can adapt to setting of the user, and the user can experience good noise reduction effect.

In a possible implementation of the fourth aspect, the loudspeaker is disposed in a backrest of a vehicle seat.

When the foregoing manner is used, because the loudspeaker is disposed in the backrest of the vehicle seat, good noise reduction effect can be obtained with reference to the description in the first aspect.

A fifth aspect of this application provides a noise control apparatus, including a processing module and an obtaining module. The obtaining module is configured to obtain sound information; and the processing module is configured to: determine anti-noise information based on the sound information; and send a first control instruction based on the anti-noise information, where the control instruction is used to enable a loudspeaker to emit anti-noise.

In a possible implementation of the fifth aspect,
the processing module is further configured to send a second control instruction, where the second control instruction is used to adjust a sound emitting direction of a loudspeaker.

In a possible implementation of the fifth aspect, the obtaining module is further configured to obtain ear position information of a user.

The processing module is specifically configured to send the second control instruction based on the ear position information of the user.

In a possible implementation of the fifth aspect, the obtaining module is further configured to obtain identity information of the user.

The processing module is specifically configured to send the second control instruction based on the identity information of the user.

In a possible implementation of the fifth aspect, the processing module is further configured to send a third control instruction, where the third control instruction is used to adjust a height position of the loudspeaker.

In a possible implementation of the fifth aspect, the obtaining module is further configured to obtain the ear position information of the user; and the processing module is specifically configured to send the third control instruction based on the ear position information of the user.

In a possible implementation of the fifth aspect, the obtaining module is further configured to obtain the identity information of the user; and the processing module is specifically configured to send the third control instruction based on the identity information of the user.

In a possible implementation of the fifth aspect, the loudspeaker is disposed in a backrest of a vehicle seat.

A sixth aspect of this application provides a computer program, where when the computer program is run by a computer, the computer is enabled to perform the method according to any solution in the fourth aspect.

A seventh aspect of this application provides a computer-readable storage medium, where the computer-readable storage medium stores a computer program, and when the computer program is run by a computer, the computer is enabled to perform the method according to any solution in the fourth aspect.

An eighth aspect of this application provides an electronic device, including a processor and a memory, where the memory stores a computer program. When the computer program is run by the processor, the processor is enabled to perform the method according to any solution in the fourth aspect.

According to the fifth aspect to the eighth aspect, same technical effect as that of the fourth aspect can be obtained. Details are not described herein again.

In a vehicle seat or the like that is provided in this application and used for active noise reduction in a vehicle cockpit, in comparison with an existing solution in which an anti-noise source is mounted in a headrest, a loudspeaker used as an anti-noise source is disposed inside a backrest. This increases robustness of an active noise reduction system to head movement of occupants.

In addition, in the vehicle seat or the like that is provided in this application and used for active noise reduction in the vehicle cockpit, in comparison with an existing seat structure, a backrest framework is improved to facilitate mounting of a loudspeaker including a cavity in a backrest of a seat.

In addition, in the vehicle seat or the like that is provided in this application and used for active noise reduction in the vehicle cockpit, in comparison with a headrest loudspeaker solution, a distance between an anti-noise source and a human ear is properly increased, so that current noise of the active noise reduction system has less impact on human hearing, thereby improving noise reduction effect.

### BRIEF DESCRIPTION OF DRAWINGS

FIG. 1 is an illustrative diagram of active noise control;
FIG. 2 is a diagram of a vehicle according to an embodiment of this application;
FIG. 3 is a three-dimensional diagram of a seat according to an embodiment of this application;
FIG. 4 is another three-dimensional diagram of a seat according to an embodiment of this application;
FIG. 5 is a diagram of a seat in a status in which a skin and a padding are removed according to an embodiment of this application;
FIG. 6 is a diagram of a seat having a structure different from that in FIG. 4 according to an embodiment of this application;
FIG. 7 is a diagram of a loudspeaker according to an embodiment of this application;
FIG. 8 is a diagram of a mounting structure of a loudspeaker according to an embodiment of this application;
FIG. 9 is a schematic top view of a seat according to an embodiment of this application;
FIG. 10 is a diagram of another mounting structure of a loudspeaker according to an embodiment of this application;
FIG. 11 is another diagram of a mounting structure of a loudspeaker in FIG. 9;
FIG. 12 is a diagram of a mounting structure of a loudspeaker different from a structure in FIG. 9 according to an embodiment of this application;
FIG. 13 is a diagram of an adjustment structure of a loudspeaker according to an embodiment of this application;
FIG. 14 is a diagram of another adjustment structure of a loudspeaker according to an embodiment of this application;
FIG. 15 is a diagram of a moving structure of a loudspeaker according to an embodiment of this application;
FIG. 16 is an illustrative diagram of a noise control method according to an embodiment of this application;
FIG. 17 is a diagram of a structure of a control apparatus according to an embodiment of this application;
FIG. 18 is a diagram of a structure of an electronic device according to an embodiment of this application; and
FIG. 19 is an illustrative diagram of a test method for testing noise reduction effect of a noise reduction solution according to this application.

### DESCRIPTION OF EMBODIMENTS

In the conventional technology, there is an active noise reduction solution in which a loudspeaker that is used as an anti-noise source is mounted in a door or a headrest of a vehicle. However, it is actually found that noise reduction effect of these solutions is poor at an ear of a passenger, and there is still room for improvement.

Embodiments of this application provide a vehicle, a vehicle seat, a loudspeaker, and the like, to improve noise reduction effect.

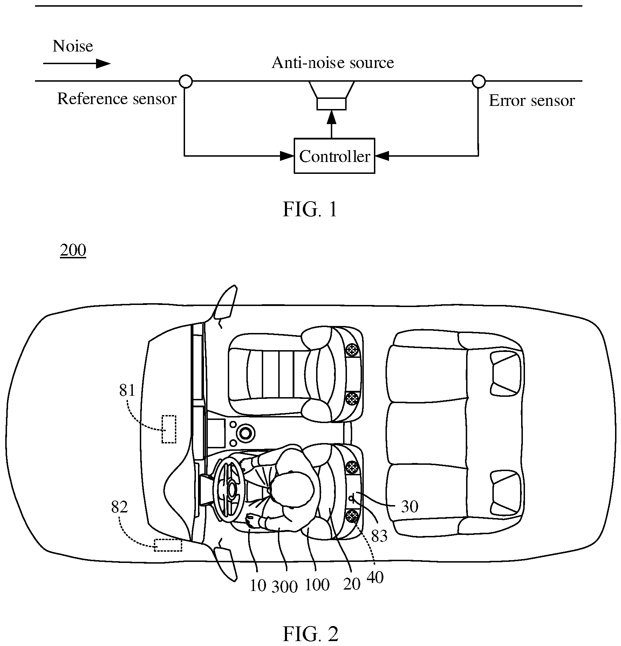

FIG. 1 is an illustrative diagram of active noise control. This figure shows a feedforward active noise control manner. As shown in FIG. 1, noise emitted by a noise source is propagated downstream along a propagation path, a reference sensor collects a noise input signal, an error sensor collects a residual signal, and the noise input signal and the residual signal are sent to a controller. The controller processes the signals by using an adaptive control algorithm, and outputs a control signal to an anti-noise source (for example, a loudspeaker), so that the anti-noise source generates anti-noise that can perform destructive interference with the noise. The noise and the anti-noise are superimposed, so that noise at the error sensor is effectively attenuated. In addition, when applied to a vehicle, the reference sensor may include a sound pickup (for example, a microphone) and an accelerometer (which may also be referred to as a vibration sensor), and the error sensor may include a sound pickup.

In addition to feedforward active noise control, there is also feedback active noise control. In a feedback active noise control solution, the reference sensor in FIG. 1 is omitted, and control is performed by using the signal of the error sensor. It may be understood that a specific operation manner in a controller in the feedback control solution is different from an operation manner in the feedforward control solution. In embodiments of this application, a specific manner of active noise control is not specially limited, and feedforward active noise control may be used, or feedback active noise control may be used, or a combination of feedforward and feedback control may be used.

In the following description, a front-back direction, a left-right direction, and an up-down direction are defined by using a vehicle as a reference. The front-back direction is a front-back direction in which the vehicle moves forward. The left-right direction is a left-right direction of the vehicle. The up-down direction is an up-down direction of the vehicle. In addition, these directions are consistent with a front-back direction, a left-right direction, and an up-down direction of a driver. In addition, although the seat may have a plurality of statuses or postures, unless otherwise specified, directions of the seat or components of the seat described in this specification are directions in a status in which a seated person on the seat faces the front and a backrest of the seat is approximately vertical relative to a cushion.

FIG. 2 is a diagram of a vehicle according to an embodiment of this application. As shown in FIG. 2, a vehicle 200 includes a seat 100, a control apparatus 81, a reference sensor 82, and an error sensor 83. The seat 100 is for a seated person 300 to take, and includes a cushion 10, a backrest 20, a headrest 30, and a loudspeaker 40. The loudspeaker 40 is an anti-noise source in automatic noise control, and is mounted on the backrest 20.

The reference sensor 82 is configured to collect a reference signal of noise, and may include, for example, an accelerometer (also referred to as a vibration sensor) disposed on a vehicle body or a suspension, or may include a microphone disposed in a cockpit. The error sensor 83 is configured to detect residual noise, for example, may include a microphone disposed in a ceiling or the headrest 30. Sensor information of the reference sensor 82 and the error sensor 83 is sent to the control apparatus 81, and the control apparatus 81 performs corresponding calculation and outputs a control signal to the loudspeaker 40, so that the loudspeaker 40 generates anti-noise that can perform destructive interference with the noise. The anti-noise and the noise are superimposed, so that at least noise near an ear of the seated person of the seat 100 is effectively attenuated, thereby implementing noise reduction.

When the structure in this embodiment is used, because the loudspeaker 40 is mounted on the backrest 20, reliable noise reduction effect can be provided for the seated person 300. Specifically, for example, in comparison with a manner in which a loudspeaker is mounted inside a vehicle door, a distance between the loudspeaker 40 and the ear of the seated person is more appropriate. Therefore, good noise reduction effect can be obtained, and power consumption can also be reduced. In addition, in comparison with a manner in which the loudspeaker is mounted in the headrest 30, for example, a case in which the loudspeaker is excessively close to the ear of the seated person and current noise of the loudspeaker affects hearing of the seated person can be avoided, thereby improving noise reduction effect. In addition, because space in the backrest 20 is sufficient in comparison with that in the headrest 30, a case in which noise reduction effect is reduced due to a limited size of the loudspeaker 40 can be suppressed.

It may be understood that the control apparatus 81, the reference sensor 82, the error sensor 83, and the seat 100 (and the loudspeaker 40) form an automatic noise control system.

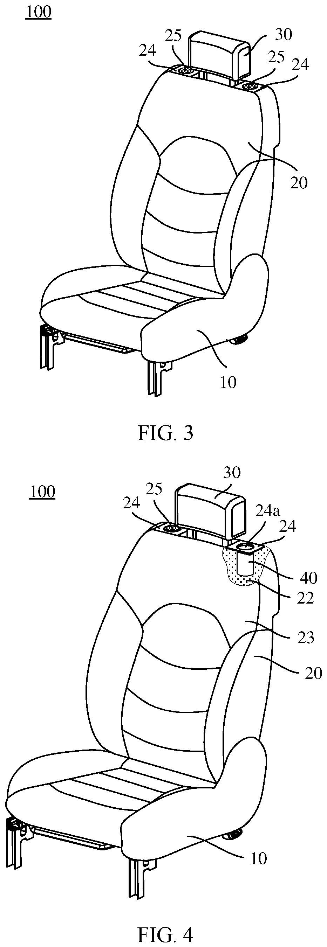

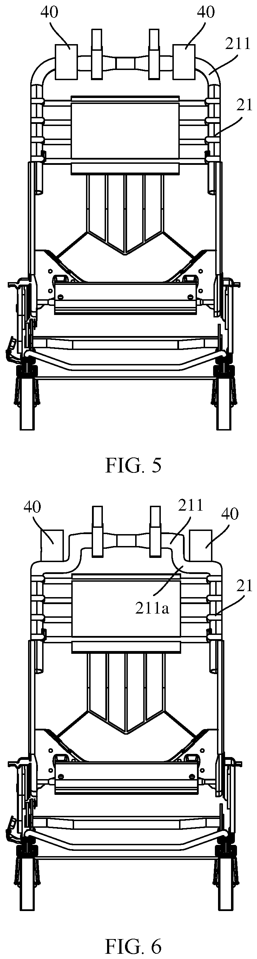

FIG. 3 is a three-dimensional diagram of a seat according to an embodiment of this application. FIG. 4 is another three-dimensional diagram of a seat according to an embodiment of this application. FIG. 5 is a diagram of a seat in a status in which a skin and a padding are removed according to an embodiment of this application.

As shown in FIG. 3 to FIG. 5, a seat 100 includes a cushion 10, a backrest 20, a headrest 30, and a loudspeaker 40. The cushion 10 is used to support the hip of a seated person. The backrest 20 is mounted at the rear of the cushion 10, and a tilt angle can be adjusted by using a backrest angle adjusting mechanism (not shown in the figure). The backrest 20 is used to support the back of the seated person. The headrest 30 is mounted on an upper part of the backrest 20, protrudes from the backrest 20 to the top, and is configured to support the head and neck of the seated person.

The loudspeaker 40 is mounted on an upper half of the backrest 20, and a sound emitting direction of the loudspeaker 40 faces upward. Because a height of the head of the seated person is generally approximately the same as a height of the headrest 30, and is higher than the upper surface of the backrest 20, the loudspeaker 40 is mounted on the upper half of the backrest 20, and the sound emitting direction of the loudspeaker 40 is made upward, so that a sound wave emitted by the loudspeaker 40 can reach as much as possible near the head of the seated person, thereby achieving good noise reduction effect.

In addition, in this embodiment, loudspeakers 40 are separately disposed on two sides of the headrest 30. There may be one or more loudspeakers 40 on one side. A specific structure of the loudspeaker 40 is not specifically limited, and may be a single loudspeaker or a loudspeaker array. For a single loudspeaker, a sound emitting direction may be understood as a direction of a center line of a diaphragm. For a loudspeaker array, a sound emitting direction may be understood as a direction of a strongest sound wave. It may be understood that the sound wave emitted by the loudspeaker 40 is not only propagated along a sound emitting direction, but also spreads around. Therefore, although the sound emitting direction of the loudspeaker 40 is upward, the sound wave emitted by the loudspeaker 40 can be propagated to the ear of the seated person 300.

In addition, the sound emitting direction of the loudspeaker 40 is not limited to upward, for example, may further be a left-right direction, or a front direction. For another example, the loudspeaker 40 may be further configured in an inclined manner, so that the sound emitting direction of the loudspeaker 40 is tilted leftward or rightward or towards the front relative to an up-down direction.

In addition, the loudspeaker 40 may not only be used as an anti-noise source, but also be used as another sound source, for example, used as a sound source for playing music or playing voice.

In addition, the loudspeaker 40 may not only be mounted in a seat of a driver, but also be mounted in a seat of a front passenger or a seat in a rear row.

In addition, in FIG. 2 and FIG. 3, the loudspeakers 40 are respectively mounted on two sides of the headrest 30. However, this application is not limited thereto, and the loudspeaker 40 may be mounted only on one side of the headrest 30.

As shown in FIG. 4 and FIG. 5, the backrest 20 has a framework 21, a padding 22, and a skin 23. The framework 21 may be made of a plurality of pipe materials or plate materials, and is a main force-bearing mechanism of the backrest 20. The padding 22 is disposed on the framework 21, for example, may be made of a polyurethane material, to provide a buffer for the seated person 300 and improve ride comfort. The skin 23 is coated outside the padding 22, and may be made of leather or cloth, and is used to improve aesthetics and ride comfort. In addition, it may be understood that, similar to the backrest 20, the cushion 10 also includes a framework, a padding, and a skin.

As shown in FIG. 5, the loudspeaker 40 is mounted on the framework 21. In this way, for example, in comparison with a case in which the loudspeaker 40 is mounted only on the padding, mounting strength of the loudspeaker 40 can be improved, and position stability of the loudspeaker 40 can be improved, thereby improving stability of noise reduction effect. A specific mounting manner of the loudspeaker 40 is not specifically limited, for example, a manner such as a screw, a buckle, or welding may be used. A part that is used to mount a screw, a buckle part, or a welding part that is on the loudspeaker 40 and is corresponding to a mounting part of the loudspeaker in this application, and the mounting part is configured to be mounted on the framework of the backrest.

In addition, in this embodiment, the framework 21 has a shoulder 211, and the loudspeaker 40 is mounted on the shoulder 211 from the front. In addition, the shoulder 211 is made of a pipe material. However, a mounting position of the loudspeaker 40 is not limited thereto. For example, the loudspeaker 40 may also be mounted on a left side and a right side of the framework 21.

FIG. 6 is a diagram of a seat having a structure different from that in FIG. 5 according to an embodiment of this application.

As shown in FIG. 6, the shoulder 211 of the framework 21 has a recess 211a that is recessed downward, and the loudspeaker 40 is mounted on the recess 211a. In this way, mounting strength of the loudspeaker 40 can be easily improved. In addition, a decrease in comfort caused by mounting of the loudspeaker 40 to the backrest 20 may be further suppressed. Specifically, in comparison with the padding 22 and the skin 23, a material of the loudspeaker 40 is hard. Therefore, when the seated person 300 leans against the backrest 20, the seated person 300 may feel, through tactile feeling, that there is a hard object in the padding 22. This reduces ride comfort. A thinner material of the padding 22 between the loudspeaker 40 and the seated person 300 indicates that the seated person is more likely to feel this kind of feeling. However, in the embodiment shown in FIG. 6, a recess 211a that is recessed downward is disposed on the shoulder 211 of the framework 21, and the loudspeaker 40 is configured in the recess 211a. Therefore, in comparison with the embodiment shown in FIG. 5, the loudspeaker 40 is located in a rear position. In this way, a part, in the padding 22, located in front of the loudspeaker 40 is thicker, that is, a buffer material between the loudspeaker 40 and the back of the seated person 300 is thicker. In this way, existence of the hard loudspeaker 40 that is felt by the seated person 300 through tactile feeling can be suppressed, and a decrease in ride comfort can be suppressed.

In addition, in this embodiment, the shoulder 211 of the framework 21 includes a pipe, and the foregoing recess 211a is formed by bending the pipe. In this way, the recess 211a can be easily formed.

In addition, in this embodiment, the recess 211a is open to the outside in a left-right direction, that is, a recess 211a on the left side is open to the left side, and a recess 211a on the right side is open to the right side. In this way, a structure can be simplified, and the framework 21 can be easily manufactured.

In addition, the recess 211a in this embodiment may also be described as follows: From a front-back direction, the recess 211a on the left side has only one side wall part, that is, a right side wall part, and does not have a left side wall part. The recess 211a on the right side has only one side wall part, that is, a left side wall part, and does not have a right side wall part.

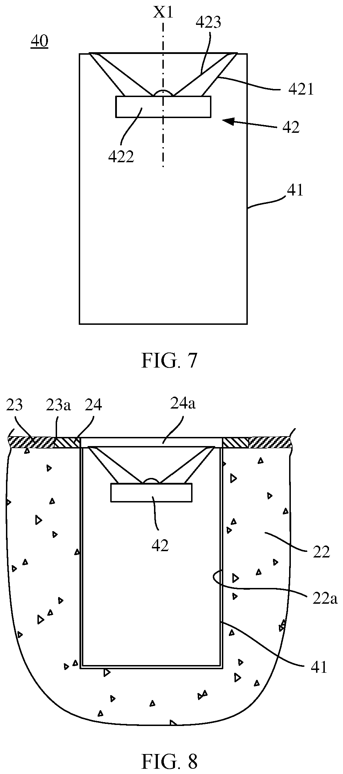

FIG. 7 is a diagram of a loudspeaker according to an embodiment of this application.

As shown in FIG. 7, the loudspeaker 40 includes a box 41 and a sound emitting unit 42. The box 41 is in a hollow cylinder shape, a square cylinder shape, or another shape, and has a cavity inside. The box 41 may be made of a material like plastic or wood. The sound emitting unit 42 is accommodated in the cavity. The sound emitting unit 42 includes a bracket 421, a magnet module 422, and a diaphragm 423. The bracket 421 is mounted on the box 41, and is configured to support the magnet module 422 and the diaphragm 423. The bracket 421 may be in a basin shape, and a hollow-out structure may be disposed on a wall of the basin. The magnet module 422 is configured to drive the diaphragm 423 to generate vibration and emit a sound wave. The diaphragm 423 is configured to generate the sound wave. A direction of a center line X1 of the diaphragm 423 is basically the same as a sound emitting direction of the loudspeaker 40.

When the loudspeaker 40 is mounted on the backrest 20, an included angle between a center line X1 of the diaphragm 423 of the loudspeaker 40 and a vertical direction (that is, an up-down direction) may be set to 0 to 60 degrees. In this way, the diaphragm 423 is made to point to a head position as much as possible, so that good noise reduction effect can be obtained. In addition, this application is not limited thereto. The included angle between the center line X1 of the diaphragm 423 of the loudspeaker 40 and the vertical direction may also be set within a range of 0 to 45 degrees, 0 to 30 degrees, or the like. Alternatively, a specific value of the included angle may be used, for example, 45 degrees, 30 degrees, or 10 degrees.

In addition, a diameter of the diaphragm 423 of the loudspeaker 40 may be set to 1 to 4 Chinese inches, where 1 Chinese inch is approximately equal to 10/3 centimeters. Generally, a smaller volume of the loudspeaker 40 indicates poorer low frequency performance. However, the diameter of the diaphragm 423 is set to 1 to 4 Chinese inches, so that the loudspeaker 40 can have good low frequency performance, and it can be avoided that the loudspeaker 40 is difficult to mount because of an excessively large volume. An inner cavity volume of the box 41 may be 1 to 3 liters. Therefore, the loudspeaker 40 can have good low frequency performance, and it can be avoided that the loudspeaker 40 is difficult to mount because of an excessively large volume.

In addition, this application is not limited thereto. The diameter of the diaphragm 423 of the loudspeaker 40 may be set within a range of 1 to 3 Chinese inches, 1 to 5 Chinese inches, 2 to 5 Chinese inches, or the like. For example, the diameter of the diaphragm 423 may be 2 Chinese inches or 3 Chinese inches. The inner cavity volume of the box 41 may be set in a range of 0.5 to 1 liter, 1 to 2 liters, 2 to 3 liters, 3 to 5 liters, or the like. For example, the inner cavity volume of the box 41 may be 0.5 liters or 1 liter.

It should be understood that a range mentioned in this application may include a boundary value. For example, 1 to 2 liters include 1 liter and 2 liters, and 0 to 45 degrees may include 0 degrees and 45 degrees. A specific implementation error is allowed for the foregoing values.

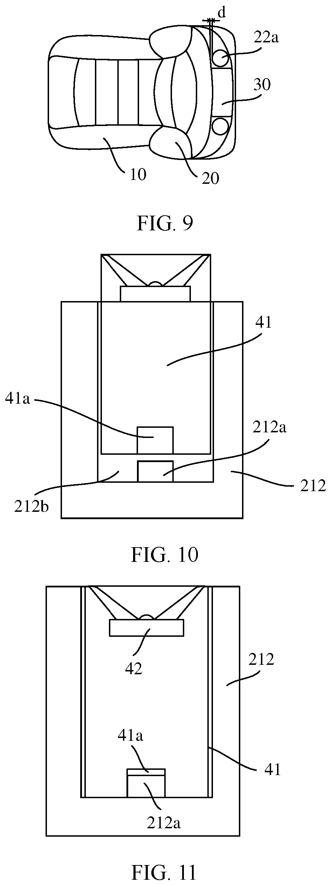

FIG. 8 is a diagram of a mounting structure of a loudspeaker according to an embodiment of this application. FIG. 9 is a schematic top view of a seat according to an embodiment of this application.

As shown in FIG. 8 and FIG. 9, an accommodating hole 22a is disposed on the padding 22, the accommodating hole 22a has an opening that is opened upward, the loudspeaker 40 is accommodated in the accommodating hole 22a, and the sound emitting unit 42 of the loudspeaker 40 is exposed through the opening of the accommodating hole 22a. In this embodiment, when being viewed from an up-down direction, the accommodating hole 22a is circular, and can match a cylindrical box 41 of the loudspeaker 40. A diameter of the accommodating hole 22a is basically equal to an outer diameter of the box 41. A shape of the accommodating hole 22a is not limited thereto, and may alternatively be, for example, a square. In addition, the accommodating hole 22a may also be opened backward. Specifically, the circular accommodating hole 22a is used as an example. In case of top view, a contour line of the accommodating hole 22a is not an integral circle, but has an opening on a rear side.

In addition, an opening 23a is disposed on the skin 23. When being viewed from the up-down direction, the opening 23a coincides with the opening of the accommodating hole 22a, and the opening 23a is slightly greater than the opening of the accommodating hole 22a. A mounting component 24 is disposed on the opening 23a of the skin 23, and an opening 24a is disposed on the mounting component 24. When being viewed from the up-down direction, the opening 24a coincides with the opening of the accommodating hole 22a. In addition, it may be understood that, when being viewed from the up-down direction (that is, when being viewed from a direction facing the opening 23a), a position of the opening 23a coincides with a position of the loudspeaker 40.

A shield 25 (FIG. 3) is mounted on the opening 24a, and the shield 25 covers an upper part of the loudspeaker 40, or the shield 25 covers the opening 23a of the skin 23 or the opening 24a of the mounting component 24. The shield 25 has a plurality of through holes, and is similar to a sieve mesh as a whole. Therefore, in one aspect, a sound wave emitted by the loudspeaker 40 can be propagated outside the backrest; and in another aspect, a foreign object can be prevented from contacting the loudspeaker 40, to avoid damage to the loudspeaker 40, and in particular, a diaphragm of the loudspeaker 40 can be protected from being squeezed or scratched.

A size of the shield 25 is not specially limited, and may be the same as a size of the sound emitting unit 42, may be greater than that of the sound emitting unit 42, or may be less than that of the sound emitting unit 42.

A material of the shield 25 is not specially limited, and may be a metal part, or may be a hard material part like a plastic part.

In addition, in this embodiment, the shield 25 is mounted on the skin 23a in a detachable manner. In this way, the shield 25 may be removed, so that an operation like mounting, maintenance, or replacement of the loudspeaker 40 can be easily performed. In another embodiment, the shield 25 may alternatively be mounted on the skin 23a in a non-detachable manner. A specific mounting manner of the shield 25 is not particularly limited. For example, the shield 25 may be mounted on the mounting component 24 by using a buckle, a screw, or the like.

In addition, in this embodiment, the shield 25 is mounted on the skin 23 by using the mounting component 24. The mounting component 24 is, for example, a square (rectangle or square) plate, and the shield 25 is circular. In comparison with a circular mounting component 24, the square mounting component 24 can be easily connected to the skin 23. In this way, the circular shield 25 may be easily mounted on the skin 23 by using the mounting component 24. In addition, shapes of the shield 25 and the mounting component 24 are not limited thereto, and other shapes may alternatively be used. In addition, the mounting component 24 may be omitted, so that the shield 25 is directly mounted on the skin 23.

A manner of connecting the mounting component 24 to the skin 23 is not particularly limited, for example, a manner of stitching, clamping, or bonding may be used. There is no special limitation on a material of the mounting component 24, for example, the mounting component 24 may be made of a material like metal or plastic. The opening 24a of the mounting component 24 may be greater than the diameter of the accommodating hole 22a. In this way, the loudspeaker 40 can easily pass through the opening 24a, so that an operation like mounting, maintenance, or replacement of the loudspeaker 40 can be easily performed.

In addition, in this embodiment, one mounting component 24 corresponds to one loudspeaker 40. However, this application is not limited thereto. For example, one mounting component 24 may correspond to a plurality of loudspeakers 40. Specifically, for example, the mounting component 24 on the left side and the mounting component 24 on the right side in FIG. 4 are improved to be formed by one mounting component, and two openings: a left opening and a right opening are formed on the mounting component, to correspond respectively to the loudspeaker 40 on the left side and the loudspeaker 40 on the right side.

Refer to FIG. 9. The accommodating hole 22a and the headrest 30 are misaligned in a left-right direction, and do not overlap. In this way, the loudspeaker 40 and the headrest 30 are configured in a misaligned manner in the left-right direction, and the shield 25 and the headrest are disposed in a misaligned manner in the left-right direction. In this way, an operation like mounting, maintenance, or replacement of the loudspeaker 40 can be easily performed.

In addition, as described above, because the loudspeaker 40 is disposed in the padding 22, ride comfort of the seat may be decreased. To effectively suppress a decrease in ride comfort, a minimum distance between the loudspeaker 40 and a front surface of the padding 22 may be greater than 0.5 cm, to avoid a case in which the padding 22 is too thin in this part and ride comfort is affected. In addition, this application is not limited thereto, and the minimum distance may be greater than 0.8 cm, 1 cm, 1.5 cm, 3 cm, 4 cm, 4.5 cm, or the like. In addition, the minimum distance may be less than 5 cm, to avoid that the accommodating hole 22a is formed too small to make it difficult to mount the loudspeaker 40. In addition, this application is not limited thereto, and the minimum distance may be less than 6 cm, 10 cm, or the like. The minimum distance between the loudspeaker 40 and the front surface of the padding 22 may also be considered as a minimum distance d (FIG. 8) between an inner wall of the accommodating hole 22a and the front surface of the padding 22.

In addition, to suppress a decrease in ride comfort, a reinforcing rib may be disposed on the inner wall of the accommodating hole 22a, to strengthen strength of the padding 22 on a part in which the accommodating hole 22a is disposed, so that a seated person does not easily feel existence of the loudspeaker 40 through tactile feeling. The reinforcing rib may be transverse, for example, may be annular. In this way, in comparison with a longitudinal reinforcing rib, strength of the padding 22 can be effectively improved.

FIG. 10 is a diagram of another mounting structure of a loudspeaker according to an embodiment of this application. FIG. 11 is another diagram of a mounting structure of a loudspeaker in FIG. 9.

As shown in FIG. 10 and FIG. 11, a box 212 is fastened on the framework 21 of the backrest 20, the box 212 has an accommodating hole 212b, and the accommodating hole 212b has an opening that is opened upward. The loudspeaker 40 is inserted into the accommodating hole 212b of the box 212 through the opening. It may be understood that the loudspeaker 40 may be easily disassembled by pulling out the loudspeaker 40 from the box 212. The loudspeaker 40 is mounted in this insertion manner, so that an operation like mounting, maintenance, or replacement of the loudspeaker 40 can be easily performed. In addition, an interface 41a is disposed on the box 41 of the loudspeaker 40, and an interface 212a is disposed on the box 212. The interface 41a is electrically connected to the interface 212a, and can supply power to the loudspeaker 40 and/or transmit a signal. When the loudspeaker 40 is inserted into the box 212, the interface 41a is also electrically connected to the interface 212a. In this way, an operation like mounting, maintenance, or replacement of the loudspeaker 40 can be easily performed.

Types of the interface 41a and the interface 212a are not specially limited, for example, a twisted pair interface or a USB interface may be used. A protocol type between the interface 41a and the interface 212a is not specially limited, and a plurality of public or private protocols may be used.

In addition, in this embodiment, the interface 41a is a female interface, and the interface 212a is a male interface. Specifically, the interface 41a is recessed from the box 41, and the interface 212a protrudes from a bottom of the accommodating hole 212b. In this way, in comparison with forming a protruding interface on the loudspeaker 40, the protruding interface can be prevented from being damaged due to impact or the like in a transportation process.

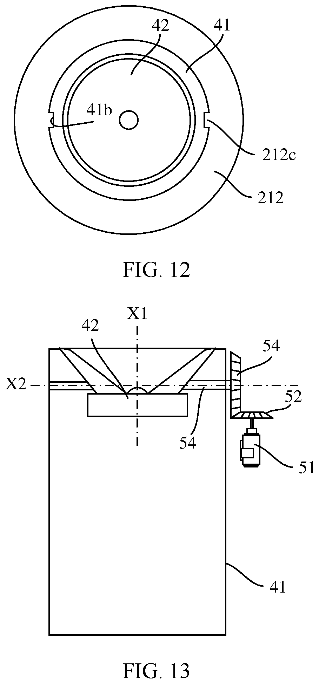

FIG. 12 is a diagram of a mounting structure of a loudspeaker according to an embodiment of this application.

As shown in FIG. 12, a guiding component 41b is disposed on the box 41 of a loudspeaker 40, and a corresponding guiding component 212c is disposed on a box 212. By cooperating with the guiding component 41b and the guiding component 212c, an insertion action when the box 41 is inserted into the box 212 can be guided, so that the box 41 is easily inserted into the box 212. In addition, the interface 41a and the interface 212a may be easily interconnected. In addition, the guiding component 41b and the guiding component 212c can further work as a rotating stopping component to suppress rotating of the box 41 relative to the box 212. The guiding component and the rotating stopping component herein belong to the mounting part in this application.

In this embodiment, the guiding component 41b is a groove disposed on an outer wall surface of the box 41, and is a long groove extending in the up-down direction. The guiding component 212c is a protrusion disposed on an inner wall surface of the box 212, and is a long strip protrusion extending in the up-down direction. It may be understood that specific structures of the guiding component 41b and the guiding component 212c are not limited thereto, and other structures may be used.

In the foregoing description, a direction of a long side of the loudspeaker 40 is consistent with the up-down direction. However, this application is not limited thereto, and the loudspeaker 40 (the box 41 of the loudspeaker 40) may also be configured in an inclined manner relative to the up-down direction. Specifically, for example, the loudspeaker 40 is tilted to an outer side of a left-right direction more closely. In this case, a configuration position of the loudspeaker 40 may be as far as possible away from the back of the seated person, to reduce a possibility that the seated person perceives existence of the loudspeaker 40 and suppress a decrease in ride comfort.

Optionally, the loudspeaker 40 is disposed in a manner in which a sound emitting direction may be adjusted.

FIG. 13 is a diagram of an adjustment structure of a loudspeaker according to an embodiment of this application.

As shown in FIG. 13, the sound emitting unit 42 is mounted on the box 41 in a manner of rotating by using an axis X2 as a center. Specifically, the sound emitting unit 42 is mounted on the box 41 by using a rotating shaft 54 extending along the left-right direction, and can rotate by using the rotating shaft 54 (an axis X2 of the rotating shaft 54) as a center. The rotating shaft 54 extends out of the box 41 from the inside of the box 41, and a gear 53 is disposed on an end part that extends out of the box 41. The gear 53 is meshed with a gear 52. The gear 52 is connected to a motor 51 mounted on the framework 21 of the backrest 20, and can be driven by the motor 51 to rotate. The rotation is transferred to the gear 53, the gear 53 drives the rotating shaft 54 to rotate, and the rotating shaft 54 drives the sound emitting unit 42 to rotate, so that a sound emitting direction (a direction of the center line X1) of the loudspeaker 40 can be adjusted. For example, the loudspeaker 40 may be adjusted from a posture in which the sound emitting direction is right upward to a posture in which the sound emitting direction is inclined forward. In this way, noise reduction effect can be improved. Herein, the motor 51, the gear 53, and the rotating shaft 54 form a driving mechanism that can adjust the sound emitting direction of the loudspeaker 40. It may be understood that a structure of the driving mechanism is not limited thereto, and any another proper structure may be used.

It may be understood that the motor 51 is controlled by a control apparatus (not shown in the figure). The control apparatus may be integrated in the control apparatus 81 (FIG. 2), or may be disposed independently of the control apparatus 81, but is signal-connected to the control apparatus 81.

In this embodiment, the control apparatus for controlling the motor 51 is integrated in the control apparatus 81. In addition, the control apparatus 81 is signal-connected to a cockpit domain controller (CDC, cockpit domain controller, not shown in the figure). The cockpit domain controller may obtain ear position information of a seated person through a sensor such as a camera (not shown in the figure) disposed in the cockpit, and send the ear position information to the control apparatus 81. The control apparatus 81 adjusts the sound emitting direction of the loudspeaker 40 based on the position information. The control apparatus 81 may be integrated into the cockpit domain controller, or may be disposed independently of the cockpit domain controller.

In addition, the control apparatus 81 may also adjust the sound emitting direction of the loudspeaker 40 based on another matter. For example, a posture of the loudspeaker 40 and different user information (or referred to as user identity information) may be associated and stored in advance, and when a user logs in to an account, the posture (including the sound emitting direction) of the loudspeaker 40 is adjusted based on the user information. For another example, the posture of the loudspeaker 40 may be further adjusted based on an instruction (including a voice instruction, a key operation instruction, and the like) of the user.

After adjusting the sound emitting direction of the loudspeaker 40, the control apparatus 81 enables the loudspeaker 40 to emit anti-noise, thereby implementing noise reduction.

These functions and other functions of the control apparatus may be implemented by a processor by executing a program (software), or may be implemented by using hardware such as an LSI (large scale integration, large scale integrated circuit) and an ASIC (application-specific integrated circuit, application-specific integrated circuit), or may be implemented by using a combination of software and hardware.

In this embodiment, the gear 52 and the gear 53 form a transmission mechanism, and the gear 52 and the gear 53 are bevel gears. However, a gear of another form may also be used.

In addition, in another embodiment, the motor 51 is not limited to being fastened on the framework 21, for example, may also be fastened on the box 41. In addition, the motor 51 may also be omitted. In this case, the sound emitting direction of the loudspeaker 40 may manually adjust by the seated person.

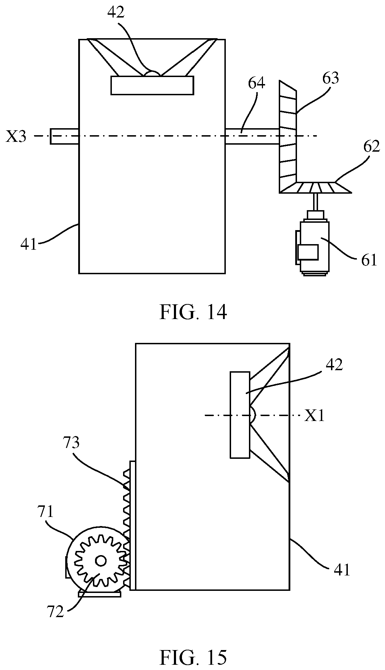

FIG. 14 is a diagram of another adjustment structure of a loudspeaker according to an embodiment of this application.

As shown in FIG. 14, a main difference between this embodiment and the embodiment shown in FIG. 13 lies in that, in the embodiment shown in FIG. 13, the sound emitting unit 42 can rotate relative to the box 41, to adjust the sound emitting direction of the loudspeaker 40. In this embodiment, the box 41 is mounted on the backrest 20 in a rotatable manner, to adjust the sound emitting direction of the loudspeaker 40.

Specifically, as shown in FIG. 14, the box 41 is mounted on the framework 21 of the backrest 20 through a rotating shaft 64 extending along a left-right direction, and can rotate relative to the backrest 20 by using the rotating shaft 64 (specifically, an axis X3 of the rotating shaft 64) as a center. A gear 63 is disposed on the rotating shaft 64, and a gear 62 is engaged on the gear 63. The gear 62 is connected to a motor 61 mounted on the framework 21 of the backrest 20, and can be driven by the motor 61 to rotate. In this way, the loudspeaker 40 can be driven to rotate relative to the backrest 20, to adjust the sound emitting direction of the loudspeaker 40.

In addition, the structure for rotating the sound emitting unit 42 and the box 41 described above is merely an example, and another rotating structure may also be used.

Herein, the motor 61, the gear 62, the gear 63, and the rotating shaft 64 form a driving mechanism (or referred to as a rotating mechanism) that can adjust the sound emitting direction of the loudspeaker 40. It may be understood that a structure of the driving mechanism is not limited thereto, and any another proper structure may be used.

Optionally, the loudspeaker 40 is mounted on the backrest 20 in a liftable manner.

FIG. 15 is a diagram of a moving structure of a loudspeaker according to an embodiment of this application.

As shown in FIG. 15, a motor 71 is mounted on the framework 21 of the backrest 20, and a gear 72 is fastened on an output shaft of the motor 71. A rack 73 is mounted on the box 41 of the loudspeaker 40, and the rack 73 extends in the up-down direction. The gear 72 is engaged with the rack 73. Driven by the motor 71, the gear 72 rotates, so that the rack 73 moves up and down, and the rack 73 drives the box 41 to move up and down, so that the loudspeaker 40 moves up and down.

In this embodiment, an initial position of the loudspeaker 40 is located below an outer surface of the skin 23, and this position is referred to as a first position. In this case, an upper surface of the loudspeaker 40 may be approximately flush with the skin 23. Driven by the motor 71, the loudspeaker 40 may be lifted upward from the first position and move to an extended position (referred to as a second position) protruding outside the outer surface of the skin 23. Optionally, the shield 25 may be mounted on the box 41, and moves with the box 41.

Herein, the motor 71, the gear 72, and the rack 73 form a driving mechanism (or referred to as a lifting mechanism) that can lift/lower the loudspeaker 40. It may be understood that a structure of the driving mechanism is not limited thereto, and any another proper structure may be used.

The control apparatus for controlling the motor 71 to drive to control the loudspeaker 40 to be lifted/lowered may be integrated into the control apparatus 81, or may be disposed independently of the control apparatus 81. In this embodiment, the control apparatus for controlling the motor 71 is integrated in the control apparatus 81. The control apparatus 81 may control, based on information indicating whether there is seating information of a seated person on the seat, the loudspeaker 40 to switch between the first position and the second position. Specifically, the control apparatus 81 obtains the seating information. When the seating information indicates that there is a seated person on the seat, the loudspeaker 40 is lifted upward from the first position to move to the second position protruding from the outer surface of the skin 23, and then the loudspeaker 40 is controlled to emit anti-noise. When the loudspeaker 40 does not need to work, the control apparatus 81 may move the loudspeaker 40 from the second position to the first position that is on the outer surface and that inserted into the skin 23.

In addition, the seating information may be obtained by using a camera or a pressure sensor disposed in the cushion 10. The control apparatus 81 may process the sensing information of the camera or the pressure sensor to obtain the seating information, or the cockpit domain controller may perform processing to obtain the seating information. The seating information is sent to the control apparatus 81.

In addition, the control apparatus 81 may also control, based on other information, the loudspeaker 40 to move to the second position. For example, the loudspeaker 40 may be moved to an extended position based on an instruction (including a voice instruction, a key operation instruction, and the like) of the seated person. Alternatively, the loudspeaker 40 is moved to the extended position based on user information of the seated person.

In addition, as shown in FIG. 15, in this embodiment, the sound emitting direction of the loudspeaker 40 is towards the front. Specifically, the center line X1 of the diaphragm 423 of the sound emitting unit 42 is approximately configured along the front-back direction, so that the diaphragm 423 faces the front. At an initial position, the upper surface of the box 41 is basically flush with the outer surface of the skin 23. In addition, in this case, the shield 25 and a related structure thereof may be omitted. In addition, the meaning of "facing the front" herein is not limited to facing the front, for example, also includes a case of facing the front upwards.

In the foregoing description, a gear rack structure is used as an example to describe the lifting structure of the loudspeaker 40. However, it may be understood that another structure, for example, a crank sliding block structure, may also be used.

The structure in which the sound emitting direction of the loudspeaker is adjustable and the structure in which the loudspeaker can be lifted/lowered may be combined in an embodiment. In this case, two motors may be used for driving separately, or only one motor may be used for driving. When only one motor is used, a clutch may be disposed in the transmission mechanism, so that an action of adjusting the sound emitting direction and an action of lifting/lowering do not interfere with each other.

In an embodiment of a control method, in an initial status, the clutch is in a first status. In the first status, the motor is connected to the lifting structure, a connection between the motor and the structure in which the sound emitting direction is adjustable is cut off, and the loudspeaker 40 is located below the outer surface of the skin 23. When the loudspeaker 40 needs to be lifted, the control apparatus sends a control instruction to the motor, so that the motor drives the loudspeaker to be lifted through the lifting structure. When the loudspeaker is lifted to a target position, the control apparatus stops the motor. Then, the clutch is switched to a second status. In the second status, the clutch connects the motor to the structure in which the sound emitting direction is adjustable, so that a connection between the motor and the lifting structure is cut off. Then, the control apparatus enables the motor to work, and enables the sound emitting unit 42 of the loudspeaker 40 to rotate by using the structure in which the sound emitting direction is adjustable, to adjust the sound emitting direction of the loudspeaker 40 to a target direction.

When the loudspeaker 40 needs to be retracted, the sound emitting direction of the loudspeaker 40 may be first adjusted to the initial direction, the motor is stopped, the clutch is switched to the first status, the motor works, and the loudspeaker 40 is moved, by using a lifting structure, to the position that is below the outer surface and that is inserted into a skin.

It may be understood that, a sequence of the action of adjusting the lifting position of the loudspeaker 40 and the action of adjusting the sound emitting direction may be interchanged.

The following describes an action process in which the vehicle 200 performs active noise control according to an embodiment of this application. The action process is mainly executed under control of the control apparatus 81.

Refer to FIG. 2 and the like. When the control apparatus 81 detects that the user 300 exists on the seat 100, the control apparatus 81 performs active noise control. The control apparatus 81 may determine, based on image information collected by a camera in the cockpit and/or pressure information collected by a pressure sensor disposed in the seat cushion 10, whether the user 300 exists on the seat 100. In addition, the determining processing may also be performed by another apparatus, and a result is sent to the control apparatus.

In addition, the user 300 may also send an instruction to the control apparatus 81 to enable the control apparatus 81 to perform active noise control. The instruction includes, for example, an operation instruction or a voice instruction.

In active noise control, the control apparatus 81 receives sound information collected by the reference sensor 82 and the error sensor 83, and performs calculation based on the sound information collected by the reference sensor 82 and the error sensor 83, to determine anti-noise information.

In addition, the control apparatus 81 enables the loudspeaker 40 to emit anti-noise based on the anti-noise information. The anti-noise and noise generate destructive interference, so that at least noise near an ear of the user 300 is suppressed, and the user 300 feels noise reduction effect.

Optionally, when performing active noise control, the control apparatus 81 may adjust the sound emitting direction of the loudspeaker 40 through a driving mechanism.

When the foregoing manner is used, because the sound emitting direction of the loudspeaker is adjusted, good noise reduction effect can be obtained.

Optionally, the control apparatus 81 may obtain ear position information of the seated person (that is, the user), and adjust the sound emitting direction of the loudspeaker based on the ear position information.

When the foregoing manner is used, because the sound emitting direction of the loudspeaker is adjusted based on the ear position information of the user, so that the user can experience good noise reduction effect.

Optionally, the control apparatus 81 may obtain user identity information, and adjust the sound emitting direction of the loudspeaker based on the user identity information.

When the foregoing manner is used, the sound emitting direction is adjusted based on the identity information of the user, so that the sound emitting direction can be adapted to setting of the user by using a memory function or the like, and the user can experience good noise reduction effect.

In addition, optionally, the control apparatus 81 may adjust a height position of the loudspeaker when performing active noise control. The height position refers to a position in an up-down direction. Specifically, a control instruction may be sent to the lifting mechanism, and the loudspeaker is lifted or lowered through the lifting mechanism, to adjust a plurality of height positions of the loudspeaker.

For example, the loudspeaker 40 is lifted by using the driving mechanism, so that the loudspeaker 40 is moved from a first position that is inserted into the skin 23 to a second position that is protruded from the outer surface of the skin 23. An action of lifting of the loudspeaker 40 may be performed at the same time with an action of emitting anti-noise, or the anti-noise may be emitted after the action of lifting of the loudspeaker 40 is completed, that is, when the loudspeaker 40 moves to the target position.

In addition, it may be understood that the second position may include a plurality of specific height positions.

When the foregoing manner is used, because the height position of the loudspeaker is adjusted, good noise reduction effect can be obtained.

In addition, the control apparatus 81 may adjust the height position of the loudspeaker based on the ear position information of the user and/or the identity information of the user.

When the foregoing manner is used, because the height position of the loudspeaker is adjusted based on the ear position information of the user, the user can experience good noise reduction effect. In addition, the height position of the loudspeaker is adjusted based on the identity information of the user, so that a height of the loudspeaker can adapt to setting of the user, and the user can experience good noise reduction effect.

In the foregoing description, the control apparatus 81 determines the anti-noise information based on the sound information collected by two sound sensors: the reference sensor 82 and the error sensor 83. However, the anti-noise information may also be determined based on sound information collected by only one sound sensor.

Embodiments of this application further provide a noise control method. The noise control method may be executed by the foregoing control apparatus 81. The control apparatus 81 may be integrated into a cockpit domain controller or another electronic device (for example, an in-vehicle smart screen). Therefore, the noise control method may also be performed by the electronic device. In addition, the control apparatus 81 may have a processor or a chip. Therefore, the noise control method may also be executed by the processor or the chip. In addition, the control apparatus 81 may belong to a seat 100 and a vehicle 200. Therefore, the noise control method may also be performed by the seat 100 or the vehicle 200. In addition, the control apparatus 81 may be made of an electronic control unit (electronic control unit, ECU) or a microcontroller unit (microcontroller unit, MCU).

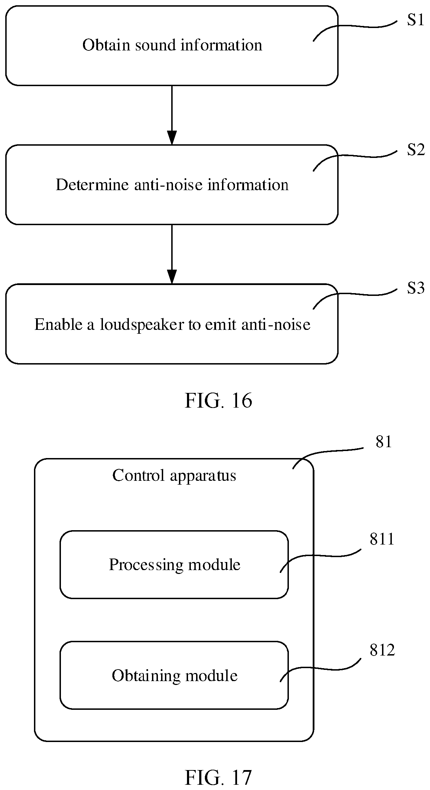

FIG. 16 is an illustrative diagram of a noise control method according to an embodiment of this application. As shown in FIG. 16, the noise control method includes: S1: Obtain sound information; S2: Determine anti-noise information based on the sound information; and S3: Enable a loudspeaker (for example, a loudspeaker 40) to emit anti-noise.

In S 1, sound information collected by one or more sound sensors may be received. The one or more sound sensors include, for example, the reference sensor 82 and the error sensor 83.

In S2, calculation is performed based on the received sound information to determine the anti-noise information.

In S3, a control instruction is sent to the loudspeaker based on the anti-noise information, so that the loudspeaker emits the anti-noise. In this case, the anti-noise and the noise generate destructive interference, so that the noise is attenuated, thereby achieving noise reduction effect.

Optionally, the noise control method may further include: S4: Send a control instruction to adjust a sound emitting direction of the loudspeaker.

Optionally, ear position information of a seated person (that is, a user) may be obtained, and the sound emitting direction of the loudspeaker is adjusted based on the ear position information.

Optionally, identity information of the user may be obtained, and the sound emitting direction of the loudspeaker is adjusted based on the identity information of the user.

Optionally, the noise control method may further include: S5: Send a control instruction to adjust a height position of the loudspeaker. The height position refers to a position in an up-down direction. Specifically, a control instruction may be sent to the lifting mechanism, and the loudspeaker is lifted or lowered through the lifting mechanism, to adjust a plurality of height positions of the loudspeaker.

In addition, optionally, the height position of the loudspeaker may be adjusted based on the ear position information of the user and/or the identity information of the user.

In addition, it may be understood that the noise control method may further include a plurality of types of content described in the foregoing embodiments.

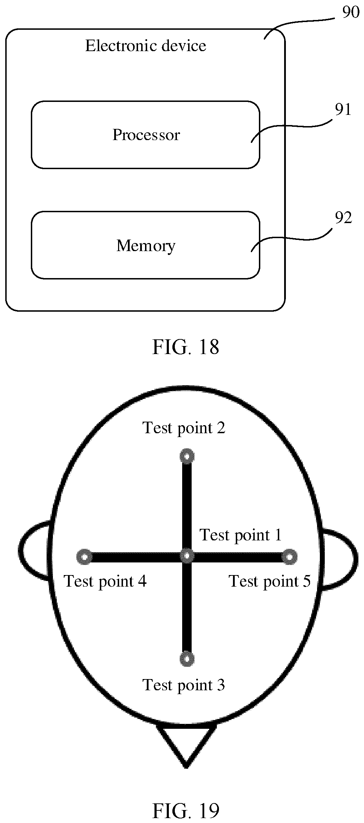

FIG. 17 is a diagram of a structure of a control apparatus according to an embodiment of this application. As shown in FIG. 17, the control apparatus 81 includes a processing module 811 and an obtaining module 812. The processing module 811 may be configured to perform content such as S2 and S3 in the foregoing noise control method, and the obtaining module 812 may be configured to perform content such as S 1. In addition, the processing module 811 may further perform content in S4 and S5. In addition, it may be understood that the processing module 811 and the obtaining module 812 may further perform a plurality of types of processing described in the foregoing embodiments. To avoid repetition, details are not described herein again. In addition, an embodiment of this application further provides a computer program, a computer-readable storage medium, and an electronic device (or a computing device). FIG. 18 is a diagram of a structure of an electronic device (or a computing device) according to an embodiment of this application. As shown in FIG. 18, an electronic device 90 has a processor 91 and a memory 92 (a computer-readable storage medium). The memory stores a computer program. When the computer program is run by a processor (or a computer), the processor (or the computer) may be enabled to perform the foregoing noise control method.

To further verify effect of the noise reduction solution in this application, the inventor performs a test. FIG. 19 is an illustrative diagram of a test method for testing noise reduction effect of a noise reduction solution according to this application.

As shown in FIG. 19 the test is performed as follows. In addition, a noise reduction solution used in the test is basically the same as the solutions shown in FIG. 2 to FIG. 9.
(1) Five target test points are set on the same horizontal plane in a head movement area of a front seat, including a test point 1 located in a center and test points 2 to 5 located in the front, rear, left, and right of test point 1. Distances between the test points 2 to 5 and the test point 1 are set to 5 cm. It may be understood that the distance is not limited to 5 cm, and may be set based on an assumed head movement range.
(2) An acceleration sensor is arranged on the vehicle body to pick up a reference signal of a feedforward active noise reduction system.
(3) A head center is located at a test point described in step (1), and two sound pickups are arranged near the human ear in this position to pick up an error signal at the human ear.
(4) An adaptive or offline mode can be used to optimize a control filter coefficient for the test point based on the reference signal and the error signal of a test point (If the adaptive mode is used, the filter coefficient is fixed after adaptive convergence).
(5) The filter coefficient for the test point obtained in step (4) through optimization is imported into an active noise control system, and the active noise reduction system is enabled.
(6) Noise reduction performance is tested at the other test points by using the filter coefficient for the test point described in step (4).
(7) Move the head center position to each test point described in step (1) in sequence, and repeat step (3) to step (6) to obtain noise reduction performance of a filter optimized for different calibration points on the other points.
(8) In comparison with noise reduction effect of a plurality of points near a front passenger seat and robustness of a sound field on head movement after control in a headrest secondary source solution in the conventional technology and a seat secondary source solution proposed in this application, filters optimized for test points 1, 2, and 3 are respectively denoted as filters 1, 2, and 3 based on the five test point locations marked in FIG. 16. A case in which a vehicle runs at a constant speed of 50 km/h (kilometer/hour, km/h), and a fixed control filter is used as an example. Table 1 shows a test result of a real vehicle using the headrest loudspeaker solution, and Table 2 shows a test result of a seat loudspeaker solution provided in this application.

**Table 1 Test result of a headrest loudspeaker solution**

| Head center position | Noise reduction amount of filter 1 | Noise reduction amount of filter 2 | Noise reduction amount of filter 3 |
|---|---|---|---|
| Test point 1 | 8.5 dBA (A weighted decibel, A weighted decibel) | 4.4 dBA | 6.6 dBA |
| Test point 2 | -1.8 dBA | 7.9 dBA | -7.7 dBA |
| Test point 3 | 5.4 dBA | 2.4 dBA | 8.3 dBA |
| Test point 4 | 7.6 dBA | 3.2 dBA | 3.3 dBA |
| Test point 5 | 7.7 dBA | 3.1 dBA | 5.4 dBA |
| Maximum difference of noise reduction amount | 10.3 dBA | 5.5 dBA | 16.0 dBA |
| Average noise reduction amount | 5.5 dBA | 4.2 dBA | 3.2 dBA |

**Table 2 Test result of a seat loudspeaker solution**

| Head center position | Noise reduction amount of filter 1 | Noise reduction amount of filter 2 | Noise reduction amount of filter 3 |
|---|---|---|---|
| Test point 1 | 5.8 dBA | 5.7 dBA | 5.1 dBA |
| Test point 2 | 3.4 dBA | 7.0 dBA | 1.8 dBA |
| Test point 3 | 3.9 dBA | 2.8 dBA | 6.7 dBA |
| Test point 4 | 6.3 dBA | 4.8 dBA | 6.0 dBA |
| Test point 5 | 5.8 dBA | 4.8 dBA | 5.1 dBA |
| Maximum difference of noise reduction amount | 2.9 dBA | 4.2 dBA | 4.9 dBA |
| Average noise reduction amount | 5.0 dBA | 5.0 dBA | 4.9 dBA |

Refer to Table 1 and Table 2. It can be learned that, in a case in which the headrest loudspeaker solution is used, when the filter 1 and the filter 3 obtained by optimizing the test point 1 and the test point 3 are used, a case in which the noise reduction amount is a negative value occurs at the test point 2, that is, a sound pressure level increases. However, noise reduction amounts at all points are positive values by using the seat loudspeaker solution provided in this application, and a maximum difference between noise reduction amounts measured at different test points by using the same filter is also less than a result of using the headrest secondary source solution. This indicates that the seat loudspeaker solution provided in this application has a larger head movement range, thereby improving robustness of the active noise reduction system for head movement of a driver.

In conclusion, the following technical effect can be obtained by using the solutions of this application.

In a vehicle seat or the like that is provided in this application and used for active noise reduction in a vehicle cockpit, in comparison with an existing solution in which an anti-noise source is mounted in a headrest, a loudspeaker used as an anti-noise source is disposed inside a backrest. This increases robustness of an active noise reduction system to head movement of occupants.

In addition, in the vehicle seat or the like that is provided in this application and used for active noise reduction in the vehicle cockpit, in comparison with an existing seat structure, a backrest framework is improved to facilitate mounting of a loudspeaker including a cavity in a backrest of a seat.

In addition, in the vehicle seat or the like that is provided in this application and used for active noise reduction in the vehicle cockpit, in comparison with a headrest loudspeaker solution, a distance between an anti-noise source and a human ear is properly increased, so that current noise of the active noise reduction system has less impact on human hearing, thereby improving noise reduction effect.

## Claims

1. A vehicle seat, comprising a backrest (20) and a loudspeaker (40), wherein
the backrest (20) comprises a first framework (21) and a skin (23);
the loudspeaker (40) is mounted on the first framework (21); and
a first opening (23a) is disposed on the skin (23), and the first opening (23a) coincides with the loudspeaker (40) when being viewed from a direction facing the first opening (23a).

2. The vehicle seat according to claim 1, wherein the first opening (23a) faces upward.

3. The vehicle seat according to claim 2, further comprising a headrest (30), wherein the first opening (23a) is configured in a left-right direction in a misaligned manner with the headrest (30).

4. The vehicle seat according to any one of claims 1 to 3, wherein the first framework (21) has a shoulder (211), the shoulder (211) is provided with a recess (211a) that is recessed downward, and the loudspeaker (40) is configured in the recess (211a).

5. The vehicle seat according to any one of claims 1 to 4, wherein a shield (25) is mounted on the skin (23), the shield (25) covers the first opening (23a), and a plurality of through holes are disposed on the shield (25).

6. The vehicle seat according to claim 5, wherein a mounting component (24) is configured on the skin (23); and
the shield (25) is mounted on the skin (23) through being mounted on the mounting component (24), and the shield (25) is mounted on the mounting component (24) in a detachable manner.

7. The vehicle seat according to claim 6, wherein the shield (25) is circular, and the mounting component (24) is square.

8. The vehicle seat according to any one of claims 1 to 7, wherein the loudspeaker (40) comprises a first box (41);
a second box (212) is configured on the first framework (21); and
the first box (41) is inserted into the second box (212) in a detachable manner.

9. The vehicle seat according to claim 8, wherein a first interface (41a) is disposed on the first box (41); and
a second interface (212a) is disposed on the second box (212), and the first interface (41a) is electrically connected to the second interface (212a).

10. The vehicle seat according to any one of claims 1 to 9, wherein the loudspeaker (40) comprises the first box (41) and a sound emitting unit (42), and the sound emitting unit (42) is mounted on the first box (41); and
the sound emitting unit (42) is mounted on the first box (41) in a manner of being capable of performing first rotation, and the first rotation is rotation centered on a first axis (X2) that is configured in the left-right direction.

11. The vehicle seat according to claim 10, further comprising a first motor (51), wherein the first motor (51) is configured to drive the sound emitting unit (42) to perform the first rotation.

12. The vehicle seat according to claim 11, further comprising a control apparatus, wherein the control apparatus obtains ear position information of a seated person, and controls, based on the ear position information, the first motor (51) to drive the sound emitting unit (42) to perform the first rotation.

13. The vehicle seat according to any one of claims 1 to 7, wherein the loudspeaker (40) is mounted on the first framework (21) in a manner of being capable of performing second rotation, and the second rotation is rotation centered on a second axis (X3) that is configured in the left-right direction.

14. The vehicle seat according to claim 13, further comprising a second motor (61), wherein the second motor (61) is configured to drive the loudspeaker (40) to perform the second rotation.

15. The vehicle seat according to claim 14, further comprising a control apparatus, wherein the control apparatus obtains ear position information of a seated person, and controls, based on the ear position information, the second motor (61) to drive the loudspeaker (40) to perform the second rotation.

16. The vehicle seat according to any one of claims 1 to 4, wherein the loudspeaker (40) is capable of moving between a first position and a second position;
in the first position, the loudspeaker (40) protrudes from the first opening outside an outer surface of the skin (23); and
in the second position, the loudspeaker (40) is inserted into the outer surface of the skin (23).

17. The vehicle seat according to claim 16, further comprising a third motor (71), wherein the third motor (71) is configured to drive the loudspeaker (40) to move between the first position and the second position.

18. The vehicle seat according to claim 14 or 15, wherein the loudspeaker (40) comprises a diaphragm (423), and the diaphragm (423) is configured facing forward.

19. The vehicle seat according to any one of claims 1 to 18, wherein the backrest (20) further comprises a padding (22), an accommodating hole (22a) is disposed on the padding (22), and the loudspeaker (40) is accommodated in the accommodating hole (22a); and
a minimum distance between a hole wall of the accommodating hole (22a) and a front surface of the padding (22) is greater than 0.5 cm.

20. The vehicle seat according to any one of claims 1 to 18, wherein the backrest (20) further comprises a padding (22), an accommodating hole (22a) is disposed on the padding (22), and the loudspeaker (40) is accommodated in the accommodating hole (22a); and
a reinforcing rib is disposed on an inner wall of the accommodating hole (22a).

21. The vehicle seat according to any one of claims 1 to 20, wherein an included angle between a center line (X1) of the diaphragm (423) of the loudspeaker (40) and a vertical direction is set to 0 to 60 degrees.

22. The vehicle seat according to any one of claims 1 to 21, wherein a diameter of the diaphragm (423) of the loudspeaker (40) is set to 1 to 4 Chinese inches.

23. The vehicle seat according to any one of claims 1 to 20, wherein the loudspeaker (40) comprises the first box (41), and an inner cavity volume of the first box (41) is 1 to 3 liters.

24. A loudspeaker, comprising a mounting part configured to be mounted on a framework of a backrest of a vehicle seat.

25. The loudspeaker according to claim 24, further comprising a first box (41) and a sound emitting unit (42), wherein the sound emitting unit (42) is mounted on the first box (41); and
the mounting part is disposed on the first box (41).

26. The loudspeaker according to claim 25, wherein an inner cavity volume of the first box (41) is 1 to 3 liters.

27. The loudspeaker according to any one of claims 24 to 26, wherein a diameter of a diaphragm (423) of the loudspeaker (40) is set to 1 to 4 Chinese inches.

28. The loudspeaker according to any one of claims 24 to 27, wherein the mounting part comprises a guiding component.

29. The loudspeaker according to any one of claims 24 to 28, wherein the loudspeaker is configured to be switched between a first position and a second position under control of a control apparatus.

30. A vehicle, comprising the vehicle seat according to any one of claims 1 to 23.
